# EUROPEAN PATENT SPECIFICATION

(11) **EP 1 696 013 B1**
(45) Date of publication and mention of the grant of the patent: **22.07.2009**
(21) Application number: 06003939.3
(22) Date of filing: 27.02.2006
(51) Int. Cl.: C09J 139/00

(54) **Pressure sensitive adhesive and patch**
Haftkleber und Klebepflaster
Adhésif autocollant et pastille

(30) Priority: 28.02.2005 JP 2005054357
(43) Date of publication of application: 30.08.2006
(73) Proprietor: Hisamitsu Pharmaceutical Co., Inc., Tosu-shi, Saga 841-0017 (JP)
(72) Inventor: Yasukochi, Takashi, Tsukuba-shi Ibaraki 305-0856 (JP); Honma, Sachiko, Tsukuba-shi Ibaraki 305-0856 (JP); Tateishi, Tetsuro, Tsukuba-shi Ibaraki 305-0856 (JP)
(74) Representative: Grünecker, Kinkeldey, Stockmair & Schwanhäusser Anwaltssozietät

(56) References cited:
- EP-A- 1 477 189
- EP-A- 1 547 579

## Description

### BACKGROUND OF THE INVENTION

### Field of the Invention

The present invention relates to a pressure sensitive adhesive, and to a patch for providing a drug used in the therapy of various diseases via transdermal absorption.

### Related Background Art

In the conventional art, rubber, acrylic and silicone pressure sensitive adhesives are used for the adhesive layers of patches. Among these adhesives, acrylic pressure sensitive adhesives offer superior drug solubility, and the relation between the carbon number of their monomer units and their glass transition temperature has often been studied.

In the case of acrylic pressure sensitive adhesives, to obtain a desired adherence, a copolymer having a specific monomer ratio was formed, or a crosslinking agent or plasticizer was added to adjust cohesive force and adhesibility. For example, an acrylic pressure sensitive tape having an adhesive layer containing highly compatible copolymers of specific compositions mixed in a specific ratio, to which liquid ingredients are blended which is then given a crosslinking treatment, and which offers superior skin adherence and drug solubility in the adhesive layer together with low skin irritation, has been proposed (Japanese Patent Application Laid-Open No 2000-44904). A technique for obtaining an acrylic pressure sensitive adhesive having sufficient tackiness and cohesive force by crosslinking a polymer having a hydroxyl group with a boron compound, has also been disclosed (Japanese Patent Application Laid-Open No 2003-213222). On the other hand, a medical pressure sensitive adhesive wherein a polymer having an acidic group or salt thereof is made to interact with a polymer having a basic group or salt thereof without using a crosslinking agent to form a pseudo-crosslinkage, having suitable tackiness and permitting easy removal from the skin, has further been proposed (Japanese Patent Application Laid-Open No HEI 10-94595).

### SUMMARY OF THE INVENTION

The adhesive layer of a patch must have a suitable tackiness and cohesion. If the tackiness (adhesibility) of the adhesive layer is too weak, sufficient skin tackiness is no longer obtained, and if it is too strong, when the patches are peeled away from the skin, the skin will be irritated due to separation of the horny layer. If the cohesive property (cohesive force) is weak, when a patch is peeled away from the skin, a part of the adhesive layer may remain on the skin.

However, when used for the adhesive layer of a transdermal absorption patch, conventional pressure sensitive adhesives were difficult to control to achieve suitable tackiness and cohesive property while still offering a high skin absorption rate of a pharmaceutical ingredient. For example, in patches using an acrylic pressure sensitive adhesive, an attempt was made to add an organic liquid ingredient which was miscible with the acrylic copolymer to weaken the strong bond between copolymers to obtain a suitable tackiness. However, in this case, it is necessary to blend a relatively large amount of a lipophilic liquid ingredient so the solubility of the lipophilic active pharmaceutical ingredient increases, and the active pharmaceutical ingredient tends to accumulate in the adhesive layer. As a result, the skin absorption of the active pharmaceutical ingredient frequently declined, and it became difficult to obtain the desired pharmaceutical effect. Further, if a pharmaceutical ingredient having the same plasticizer effect as the liquid ingredient was used, and a large amount of pharmaceutical ingredient was blended, the whole adhesive layer becomes soft and it became difficult to adjust to a proper tackiness by blending the liquid ingredient. Therefore, there was also the inconvenience that usable active pharmaceutical ingredients were limited.

It is therefore an object of the present invention, which was conceived in view of this situation, to provide a pressure sensitive adhesive which, when used for the adhesive layer of a patch, offers superior skin absorption of an active pharmaceutical ingredient, as well as a suitable tackiness and cohesive property. It is a further object of the invention to provide a patch which offers superior skin absorption of a pharmaceutical ingredient, as well as a suitable tackiness and cohesive property.

The Inventors, after intensive efforts to resolve the above problem, discovered that a combination of two copolymers obtained by copolymerization of specific monomers in a specific ratio provides a pressure sensitive adhesive which offers superior skin absorption of a pharmaceutical ingredient, as well as suitable tackiness and cohesive property. By pursuing further studies based on this knowledge, they then arrived at the present invention.

The present invention is a pressure sensitive adhesive comprising: an ingredient (A) which is a copolymer of a carboxyl group-containing monomer and (meth)acrylic ester; and an ingredient (B) which is a copolymer of a pyrrolidone group-containing monomer and (meth)acrylic ester, wherein the ingredient (A) is crosslinked by at least one crosslinking agent selected from the group consisting of a metal chelate compound, a metal oxide and a metal hydroxide, and the blending ratio of the ingredient (A) is 70 to 90 weight % based on the total amount of the ingredient (A) and ingredient (B).

The pressure sensitive adhesive of the invention contains ingredient (A) and ingredient (B) in the aforesaid specific range, and by crosslinking ingredient (A) by reacting it with a crosslinking agent such as a metal chelate compound or the like, ingredient (A) and ingredient (B) are made to cohere with each other to a suitable degree, and this may be why a suitable cohesive property and tackiness can be obtained overall even without using a plasticizer such as a liquid organic compound. Moreover, in the pressure sensitive adhesive of the invention, a superior balance between tackiness and cohesive property can be obtained without adding a plasticizer, or by adding a smaller amount thereof if such a plasticizer is used, which may be why, when the solubility of the active pharmaceutical ingredient increases excessively due to the plasticizer, the skin absorption does not much decrease.

The aforesaid crosslinking agent is preferably at least one metal chelate compound selected from an aluminum acetylacetonate complex and a titanium acetylacetonate complex. Although these specific metal chelate compounds have sufficient reactivity as crosslinking agents, their reactivity is relatively mild, so skin irritation due to reaction of the crosslinking, agent with the skin is inhibited, reaction between the crosslinking agent and active pharmaceutical ingredient is also inhibited, and the storage stability of the patch is further enhanced.

The copolymer in ingredient (A) is preferably crosslinked by reaction with 0.001 to 5 weight % of crosslinking agent based on the total amount of pressure sensitive adhesive. If the proportion of this crosslinking agent is less than 0.001 weight %, cohesive property tends to fall due to lowering of the degree of crosslinking, and when the paste (adhesive layer) is removed from the skin, the paste tends to partly remain on the skin or produce stringiness. On the other hand, if the proportion exceeds 5 weight %, the adhesive layer tends to become hard due to a higher degree of crosslinking, and exudation occurs.

The carboxyl group-containing monomer is preferably acrylic acid or methacrylic acid. It is particularly preferred that the ingredient (A) is a copolymer of acrylic acid and octyl acrylate.

The pyrrolidone group-containing monomer is preferably N-vinyl-2-pyrrolidone. It is particularly preferred that the ingredient (B) is a copolymer of 2-ethylhexyl acrylate and N-vinyl-2-pyrrolidone.

A pressure sensitive adhesive of the present invention preferably comprises 1 to 30 weight % of a liquid organic compound which is miscible with the ingredient (A) and ingredient (B) based on the total amount of the pressure sensitive adhesive. Thereby, skin absorption of the active pharmaceutical ingredient is maintained at a high level, and the pressure sensitive adhesive has better tackiness and cohesive property.

The patch of the present invention comprises an adhesive layer including the pressure sensitive adhesive of the present invention above and a pharmaceutical ingredient Since the patch has the adhesive layer formed by the pressure sensitive adhesive of the present invention, superior skin absorption of the active pharmaceutical ingredient is achieved, and suitable tackiness and cohesive property are obtained.

### BRIEF DESCRIPTION OF THE DRAWINGS

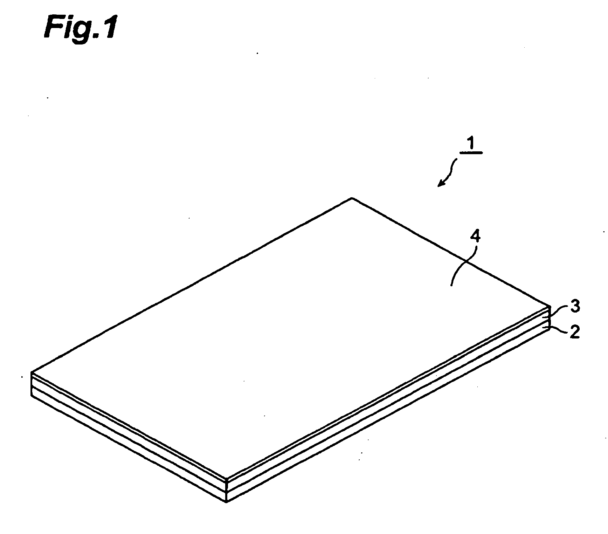

FIG 1 is a perspective view showing an embodiment of the patch according to the present invention.

### DESCRIPTION OF THE PREFERRED EMBODIMENTS

Hereafter, some preferred embodiments of the present invention will be described in detail, however the present invention is not limited to the following embodiments.

FIG 1 is a perspective view showing an embodiment of a patch according to the present invention. In a patch 1 shown in FIG 1, a laminate comprising a release liner 4 and an adhesive layer 3 provided on one side (peel-off side) of the release liner 4, is provided on a support 2 such that the adhesive layer 3 is adjacent to the support 2. When the patch 1 is used, the release liner 4 is peeled off, and the adhesive layer 3 is stuck to the skin in contact with it.

The adhesive layer 3 includes a pressure sensitive adhesive and an active pharmaceutical ingredient dispersed or dissolved therein.

The pressure sensitive adhesive in the adhesive layer 3 comprises an ingredient (A) which is a copolymer of a carboxyl group-containing monomer and a (meth)acrylic ester, and an ingredient (B) which is a copolymer of a pyrrolidone group-containing monomer and a (meth)acrylic ester. Here, the meaning of "(meth)acrylic ester" is a methacrylic acid ester or acrylic acid ester (hereafter idem).

The carboxyl group-containing monomer which is a copolymer ingredient of the ingredient (A) has a carboxyl group, and is a polymerizable monomer which copolymerizes with the (meth)acrylic ester. This carboxyl group-containing monomer is preferably acrylic acid or methacrylic acid.

The (meth)acrylic ester which is a copolymer ingredient of ingredient (A) may be for example methyl (meth)acrylate, ethyl (meth)acrylate, butyl (meth)acrylate, hexyl (meth)acrylate, heptyl (meth)acrylate, octyl (meth)acrylate or 2-ethylhexyl (meth) acrylate, and these may be used alone or in combination. Among these, octyl acrylate is preferred.

It is particularly preferred that the ingredient (A) is a copolymer of acrylic acid and octyl acrylate (hereafter, "acrylic acid-octyl acrylate copolymer)".

The blending proportion of the carboxyl group-containing monomer as a monomer unit is preferably 5 to 50 weight % relative to the total amount of the copolymer of the ingredient (A). Due to this, change over time in tackiness due to the formation of hydrogen bonds between carboxyl groups in the molecular chain are suppressed. If the active pharmaceutical ingredient in the adhesive layer 3 is basic, this blending proportion is more preferably 5 to 25 weight %. In this way, the skin absorption rate of the active pharmaceutical ingredient is further enhanced.

The pyrrolidone group-containing monomer as a copolymer ingredient of the ingredient (B) has a pyrrolidone group, and is a polymerizable monomer which copolymerizes with the (meth)acrylic ester. The pyrrolidone group-containing monomer may preferably be for example N-vinyl-2-pyrrolidone or methylvinyl pyrrolidone.

The (meth)acrylic ester which is a copolymer ingredient of the ingredient (B) may be for example methyl (meth)acrylate, ethyl (meth)acrylate, butyl (meth)acrylate, hexyl (meth)acrylate, heptyl (meth)acrylate, octyl (meth)acrylate or 2-ethylhexyl (meth) acrylate, and these may be used alone or in combination. Among these, 2-ethylhexyl acrylate is preferred.

It is particularly preferred that the ingredient (B) is a copolymer of 2-ethylhexyl acrylate and N-vinyl-2-pyrrolidone (hereafter, (2-ethylhexyl acrylate-pyrrolidone) copolymer).

The blending proportion of the pyrrolidone group-containing monomer as a monomer unit is preferably 5 to 70 weight % of the total amount of the copolymer of the ingredient (B). In order to effectively form hydrogen bonds with the copolymer which is ingredient (A) and enhance cohesive property, the blending proportion is more preferably 20 to 40 weight %.

The blending proportion of the ingredient (A) in the adhesive layer 3 is 70 to 90 weight % based on the total amount of the ingredient (A) and ingredient (B). To facilitate adjusting the balance between cohesive property and tackiness, this blending proportion is more preferably 75 to 85 weight %. This is considered to be because, when the ratio between ingredient (A) and ingredient (B) lies within this range, the carboxyl groups of ingredient (A) suitably form a cohesive structure due to hydrogen bonding with the pyrrolidone groups of ingredient (B), and suitably form a progressively crosslinked structure due to a crosslinking agent such as a metal chelate compound.

The copolymer of the ingredient (A) is crosslinked by reaction between the carboxyl groups introduced by the carboxyl group-containing monomer with at least one crosslinking agent selected from the group consisting of a metal chelate compound, metal oxide and metal hydroxide. Due to crosslinking by these crosslinking agents such as a metal chelate compound, a gradual crosslinking reaction can be performed. The copolymer of the ingredient (A) may be crosslinked for example by bonding between carboxylate groups formed by dissociation of the hydrogen atom from the carboxyl group via a metal ion such as aluminum or the like. In the adhesive layer 3, crosslinking may be formed also between the copolymer of the ingredient (A) and the copolymer of the ingredient (B), or between molecules of the ingredient (B), by reaction between a carboxyl group or hydroxyl group etc. and a metal chelate compound etc.

The metal chelate compound is preferably an aluminum chelate compound or titanium chelate compound. From the viewpoint of solubility in organic solvents and ease of handling, an aluminum acetylacetonate complex such as aluminum acetyl acetonate or a titanium acetylacetonate complex such as titanium acetylacetonate is particularly preferred.

The metal oxide is preferably a polyvalent metal oxide such as magnesium oxide or zinc oxide, and the metal hydroxide is preferably a polyvalent metal hydroxide such as calcium hydroxide or aluminum hydroxide, respectively. Aluminum hydroxide is usually added to the pressure sensitive adhesive in the form of a white suspension mixed with water, i.e., an aluminum hydroxide gel.

By selecting at least one crosslinking agent selected from the group consisting of aluminum acetylacetonate complex, titanium acetylacetonate complex, magnesium oxide, zinc oxide, calcium hydroxide and aluminum hydroxide, superior characteristics such as high skin penetration rate, suitable tackiness and cohesive property, low skin irritation and high stability of an active pharmaceutical ingredient can be achieved.

The copolymer of the ingredient (A) is crosslinked by reaction with preferably 0.001 to 5 weight %, more preferably 0.01 to 3 weight % and still more preferably 0.1 to 2 weight % of the crosslinking agent such as a metal chelate compound based on the total amount of the pressure sensitive adhesive. Due to this, the balance between cohesive property and tackiness in the pressure sensitive adhesive can be further enhanced and exudation suppressed.

The adhesive layer 3 is miscible with the copolymers of the ingredient (A) and ingredient (B), and may contain 1 to 30 weight % of an organic compound (excluding the active pharmaceutical ingredient) which is a liquid at ordinary temperature (25°C) based on the total amount of the adhesive layer 3. The adhesive layer 3 may further contain crystals of the active pharmaceutical ingredient provided that it does not adversely affect the desired pharmaceutical effect, and the presence of the liquid organic compound prevents lack of tackiness and prevents the deposition amount of crystals from changing over time. Alternatively, if the adhesive layer 3 does not contain this liquid organic compound, the skin absorption rate can be further enhanced. Hence, when the adhesive layer 3 contains the aforesaid specific ingredients, cohesive property and tackiness can be controlled such that a satisfactory balance between them is achieved without much use of the plasticizing effect of liquid ingredients.

The liquid organic compound is preferably one which does not cause skin irritation. This liquid organic compound may further have the action of an absorption enhancer, solvent or plasticizer.

Examples of a liquid organic compound having an absorption enhancement effect are capric acid, caproic acid, lauric acid, myristyric acid, palmitic acid, stearic acid, oleic acid, lauryl alcohol, myristyl alcohol, oleyl alcohol, stearyl alcohol, cetyl alcohol, methyl laurate, hexyl laurate, diethanolamide laurate, isopropyl myristate, diethyl sebacate, diisopropyl adipate, propylene glycol monolaurate, N-methyl-2-pyrrolidone, pyrrothiodecane, 1-menthol and d-limonene.

Examples of a liquid organic compound having a plasticizer effect are squalane, squalene, silicone oil, petroleum oils (e.g., processed oils such as paraffin processed oils, naphthalene processed oils and aromatic processed oils) and vegetable oils (e.g., olive oil, sunflower oil, camellia oil , tall oil and peanut oil).

Examples of a liquid organic compound having a solvent effect are dipropylene glycol, glycerol, ethylene glycol and polyethylene glycol.

Among these, it is preferred that the liquid organic compound has an absorption promoting effect, and specifically preferred that it is at least one selected from the group consisting of isopropyl myristate, diethyl sebacate, propylene glycol monolaurate and pyrrothiodecane.

The adhesive layer 3 contains an active pharmaceutical ingredient which is a drug absorbed through the skin. Examples of this active pharmaceutical ingredient are a non-steroidal anti-inflammatory drug (diclofenac, indometacin, ketoprofen, felbinac, loxoprofen, ibuprofen, flurbiprofen, thiaprofen, acemetacin, sulindac, etodolac, tolmetin, pyroxicam, meloxycam, anpyroxicam, naproxen, azapropazone, methyl salicylate, glycol salicylate, valdecoxib, celecoxib, rofecoxib), antihistamine (diphenhydramine, chlorpheniramine, mequitazine, homochlorocyclozine), antihypertensive drug (diltiazem, nicardipine, nilvadipine, metoprolol, bisoprolol, trandorapril), anti-Parkinson agent (pergolide, bromocriptine, ropinirole, seregirin), bronchodilator (tulobuterol, isopretenol, salbutamol), antiallergic drug (ketotifen, roratajin, azelastine, terfenadine), local anesthesetic (lidocaine, dibucaine), opiate pain-killer (fentanyl, morphine), urinary system drug (oxybutenene), nervous system drug (promazine, chloropromazine), steroidal hormone (estradiol, progesterone, norethisterone, cortisone, hydrocortisone), antidepressant (sertraline, fluoxetine, paroxetine, citalopram), anti-dementia drug (donepezyl, risperidon, rivastigmine, galamantine, idebenone), expectorant drug (ambroxol), anti-anxiety drug (tandospirone), antipsychotic drug (oranzapin), CNS stimulant (methylphenidate), osteoporosis therapeutic drug (raloxifene, alendronate), breast cancer prophylactic (tamoxifen), anti-obesity drug (mazindole, sibutramine), and insomnia improvement drug (melatonin). This active pharmaceutical ingredient may be used in the form of its pharmaceutically acceptable salt or derivative.

The blending proportion of the active pharmaceutical ingredient is adjusted depending on the therapeutic amount required. The active pharmaceutical ingredient is usually of the order of 1 to 40 weight %, but preferably 5 to 20 weight %, relative to the total amount of adhesive layer 3.

In order to effectively utilize the hydrogen bonds between the ingredient (A) and ingredient (B), the adhesive layer 3 is preferably a non-aqueous base which does not contain water substantially.

In addition to the aforesaid ingredients, the adhesive layer 3 may if required contain an antioxidant, ultraviolet absorbent or anti-crystallization agent. Preferred examples of an antioxidant are tocopherol and ester derivatives thereof, ascorbic acid, stearic acid ester, Nordihydroguaiaretic acid, dibutylhydroxytoluene (BHT), butylhydroxuanisole. Preferred examples of an ultraviolet absorbent are p-aminobenzoic acid ester derivative, anthranilic acid ester derivative, salicylic acid ester derivative, coumalin derivative, amino acid-based compound, imidazoline derivative, pyrimidine derivative, dioxane derivative. Preferred examples of an anti-crystallization agent are polyvinylpyrrolidone and the like. When any of the antioxidant, ultraviolet absorbent and anti-crystallization agent are added, the blending ratio thereof is preferably no more than 15 weight %, more preferably no more than 10 weight % based on the total amount of the adhesive layer 3.

The release liner 4 protects the surface of the adhesive layer 3 until the patch 1 is to be used, and is not particularly limited provided that the surface in contact with the adhesive layer 3 has release properties of sufficient order to permit its release when in use. Specific examples are polyolefins, polyesters, ethylene-vinyl acetate copolymer and paper. Among these, polyethylene, polypropylene and polyethylene terephthalate are preferred. The surface of the release liner 4 is mold release-treated with silicone or fluorine to facilitate its release, and may have a notch such as a rear split, half-cut or stitch.

The support 2 may be a non-extensible or extensible material such as a polymer film, woven or non-woven fabric. An identical material may be used for the support 2 as for the release liner 4. The support 2 preferably comprises a material which does not permit adsorption or penetration of the active pharmaceutical ingredient contained in the adhesive layer 3. Specific examples of materials which may be used for the support 2 are polyethylene terephthalate, polyurethane, polyethylene, polypropylene, rayon, cotton and aluminum sheet. The support 2 may be a laminate of plural layers.

The patch 1 can be manufactured by adding the active pharmaceutical ingredient to the pressure sensitive adhesive solution wherein the aforesaid ingredient (A), ingredient (B) and crosslinking agent have been dissolved or uniformly dispersed, coating it on the support 2 or release liner 3, removing the solvent in the solution to form the adhesive layer 3, and laminating the support 2 or release liner 4 on the adhesive layer 3.

To obtain the patch 1 by the aforesaid method, when for example the solvent in the mixed solution is removed by heating, the copolymer of the ingredient (A) is reacted with the crosslinking agent such as a metal chelate compound so as to crosslink the copolymer of ingredient (A). The heating at this time is performed to an extent sufficient to remove the solvent and perform the above reaction, but heating is usually performed at a temperature of 60 to 120°C for about 5 to 20 minutes.

The patch of the invention may take any form provided that it has an adhesive layer containing an active pharmaceutical ingredient, and is not to be construed as being limited to the example of the patch 1. For example, the adhesive layer may be laminated on one or both sides of one of the support and release liner, or the release liner may also have the function of a support.

### EXAMPLES

The present invention will now be described in further detail referring to examples and comparative examples, but the present invention is not to be construed as being limited in anyway thereby In the following description, all "%" are understood to mean weight percent.

### Manufacture of patch

### Example 1

1.5g of isopropyl myristate and 1.5g of tandospirone were added to 21.25g of a solution containing 6.97 g of a mixture of (acrylic acid-octyl acrylate) copolymer and (2-ethylhexyl acrylate-vinyl pyrrolidone) copolymer blended in a weight ratio of 80:20, 0.03 g of aluminum acetylacetonate was further added, and the mixture stirred to make a pressure sensitive adhesive solution. This pressure sensitive adhesive solution was coated on a silicone-treated polyethylene terephthalate (PET) film (release liner), the solvent was removed by drying at 80°C for about 5 minutes, and an adhesive layer of thickness 50 µm containing ingredients having the ratios (weight % shown in TABLE 1) was thus obtained. A PET film of thickness 30 µm which is a support was then stuck to the adhesive layer, and cut to a predetermined shape to obtain a patch.

### Example 2

A patch was obtained having an adhesive layer containing ingredients blended in the ratios (weight %) shown in TABLE 1 was obtained in an identical way to that of Example 1, except that the weight ratio of (acrylic acid-octyl acrylate) copolymer and (2-ethylhexyl acrylate-vinyl pyrrolidone) copolymer was 70:30.

### Example 3

A patch was obtained having an adhesive layer containing ingredients blended in the ratios (weight %) shown in TABLE 1 was obtained in an identical way to that of Example 1, except that the weight ratio of (acrylic acid-octyl acrylate) copolymer and (2-ethylhexyl acrylate-vinyl pyrrolidone) copolymer was 90:10.

### Example 4

A patch was obtained having an adhesive layer containing ingredients blended in the ratios (weight %) shown in TABLE 1 was obtained in an identical way to that of Example 1, except that the ratio of aluminum acetylacetonate was 0.6%, and the ratio of isopropyl myristate was changed so that the ratio of other ingredients relative to the total weight of adhesive layer did not vary.

### Example 6

A patch was obtained having an adhesive layer containing ingredients blended in the ratios (weight %) shown in TABLE 1 was obtained in an identical way to that of Example 1, except that in the pressure sensitive adhesive solution, 0.5 g of pyrrothiodecane was used instead of isopropyl myristate, and 0.5 g of estradiol was used instead of tandospirone.

### Example 7

A patch was obtained having an adhesive layer containing ingredients blended in the ratios (weight %) shown in TABLE 1 was obtained in an identical way to that of Example 1, except that in the pressure sensitive adhesive solution, 0.5 g of diethyl sebacate was used instead of isopropyl myristate, and 1.5 g of oxybutenene was used instead of tandospirone.

### Example 8

A patch was obtained having an adhesive layer containing ingredients blended in the ratios (weight %) shown in TABLE 1 was obtained in an identical way to that of Example 1, except that in the pressure sensitive adhesive solution, 0.5 g of N-methyl-2-pyrrolidone was used instead of isopropyl myristate, and 1.0 g of pergolide was used instead of tandospirone.

### Comparative Example 1

A patch was obtained having an adhesive layer containing ingredients blended in the ratios (weight %) shown in TABLE 1 was obtained in an identical way to that of Example 1, except that the weight ratio of (acrylic acid-octyl acrylate) copolymer and (2-ethylhexyl acrylate-vinyl pyrrolidone) copolymer was 60:40.

### Comparative Example 2

A patch was obtained having an adhesive layer containing ingredients blended in the ratios (weight %) shown in TABLE 1 was obtained in an identical way to that of Example 1, except that the weight ratio of (acrylic acid-octyl acrylate) copolymer and (2-ethylhexyl acrylate-vinyl pyrrolidone) copolymer was 30:70.

### Comparative Example 3

A patch was obtained having an adhesive layer containing ingredients blended in the ratios (weight %) shown in TABLE 1 was obtained in an identical way to that of Example 1, except that (2-ethylhexyl acrylate-vinyl pyrrolidone) copolymer was not used.

**TABLE 1**

| | | Examples | | | | | | | Comp. Ex. | | |
|---|---|---|---|---|---|---|---|---|---|---|---|
| | | 1 | 2 | 3 | 4 | 6 | 7 | 8 | 1 | 2 | 3 |
| Ingredient (A) | (Acrylic acid-octyl acrylate) copolymer* | 55.8 (80) | 48.8 (70) | 62.7 (90) | 55.8 (80) | 71.8 (80) | 63.8 (80) | 67.8 (80) | 41.8 (60) | 20.9 (30) | 69.7 (100) |
| Ingredient (B) | (2-ethylhexyl acrylate-vinyl pyrrolidone) copolymer* | 13.9 (20) | 20.9 (30) | 7.0 (10) | 13.9 (20) | 17.9 (20) | 15.9 (20) | 16.9 (20) | 27.9 (40 ) | 48.8 (70) | - |
| Liquid organic compound | Isopropyl myristate | 15 | 15 | 15 | 14.7 | - | - | - | 15 | 15 | 15 |
| | Pyrrothiodecane | - | - | - | - | 5 | - | - | - | - | - |
| | Diethyl sebacate | - | - | - | - | - | 5 | - | - | - | - |
| | N-methyl-2-pyrrolidone | - | - | - | - | - | - | 5 | - | - | - |
| Active Pharmaceutical Ingredient | Tandospirone | 15 | 15 | 15 | 15 | - | - | - | 15 | 15 | 15 |
| | Estradiol | - | - | - | - | 5 | - | - | - | - | - |
| | Oxybutene | - | - | - | - | - | 15 | - | - | - | - |
| | Pergolide | - | - | - | - | - | - | 10 | - | - | - |
| Metal chelate compound | Aluminum acetylacetonate 1 | 0.3 | 0.3 | 0.3 | 0.6 | 0.3 | 0.3 | 0.3 | 0.3 | 0.3 | 0.3 |
| total | | 100 | 100 | 100 | 100 | 100 | 100 | 100 | 100 | 100 | 100 |

| | | | | | | | | | | | |
|---|---|---|---|---|---|---|---|---|---|---|---|
| *values in parentheses represent the weight ratio of the ingredient (A) and ingredient (B) | | | | | | | | | | | |

### Evaluation of patch

### Skin absorption test

Patches manufactured according to Examples 1, 6-8 and Comparative Examples 1-2 were applied to the horny layer side of the skin peeled from the back of a nude mouse, and fixed in a flow-through diffusion cell (effective surface area 5 cm²) with the dermis of the skin facing the receptor layer. Warm water was then circulated around the cell so that the temperature of the skin surface was 32°C. The receptor solution was sampled at a rate of 5 m/hr every 2 hours up to 24 hours using a physiological saline solution. The active pharmaceutical ingredient concentration was measured for the receptor solution obtained at each time by high performance liquid chromatography, and the skin penetration rate per hour was determined based on this measurement result. TABLE 2 summarizes the results.

### Physical properties of preparation

### Cohesive property

Each patch was cut to a circle of diameter 25 mm, stuck to the upper arm, and peeled off after 2 hours had elapsed. The amount of paste remaining on the skin was visually observed. Likewise, stringiness after peeling off the liner, and stringiness remaining after a finger was pressed firmly onto the adhesive layer and released, was also observed. Based on these observations, the cohesive property was determined according to the following criteria. In the following criteria, A denotes the best cohesive property of the adhesive layer, while B, C, D denote progressively decreasing cohesive property.
A: No stringiness, no remaining paste.
B: No stringiness, slight remaining paste.
C: Stringiness and remaining paste.
D: Cohesion failure when release liner was pulled away, test not possible.

### Tackiness

Each patch was cut to a circle of diameter 25 mm, the release liner was peeled off, a finger was applied to the adhesive layer surface and left in contact for 1-2 seconds. A functional evaluation of tackiness was made when the finger was removed from the surface (finger tackiness test), and tackiness was evaluated according to the following criteria. In the following criteria, A denotes the best tackiness of the adhesive layer, while B, C, D denote progressively decreasing tackiness.
A: High tackiness.
B: Less tackiness than A, but still tacky.
C: Slight tackiness.
D: No tackiness.

**TABLE 2**

| | Skin penetration rate [µg/cm²/hr] | Cohesive property | Tackiness |
|---|---|---|---|
| Example 1 | 18.0 | A | A |
| Example 2 | - | B | A |
| Example 3 | - | A | A |
| Example 4 | - | A | A |
| Example 6 | 0.42 | A | A |
| Example 7 | 9.5 | A | A |
| Example 8 | 1.6 | A | A |
| Comp. Ex. 1 | 19.7 | C | A |
| Comp. Ex. 2 | 10.8 | C | C |
| Comp. Ex. 3 | - | D | B |

As shown in TABLE 2, patches wherein the blending proportion of (acrylic acid-octyl acrylate) copolymer which is the ingredient (A) was within the range of 70 to 90 weight % relative to the total weight of the ingredient (A) and (2-ethylhexyl acrylate-vinyl pyrrolidone) copolymer which is the ingredient (B), were found to have superior cohesive property and tackiness. For Example 1, it was found that a sufficient skin penetration rate of the same order as that of Comparative Example 1 using the same active pharmaceutical ingredient was obtained. For Examples 6-8, considering the type and content of the active pharmaceutical ingredients respectively used, a practically useful skin penetration rate was obtained. On the other hand, for patches of comparative examples where the blending proportion of the ingredient (A) was not within the aforesaid range, at least one of cohesive property and tackiness was not sufficient. In particular, the patches of the comparative examples tended to have poorer cohesive property.

According to the present invention, there is provided an improved adhesive layer offering superior skin absorption of an active pharmaceutical ingredient as well as a superior balance between tackiness and cohesive property, and a patch comprising same. Also, even if the patch of the present invention is applied for a long time, it does not damage the horny layer of the skin when it is peeled off, and its skin safety is high.

## Claims

1. A pressure sensitive adhesive comprising:
an ingredient (A) which is a copolymer of a carboxyl group-containing monomer and (meth)acrylic ester; and
an ingredient (B) which is a copolymer of a pyrrolidone group-containing monomer and (meth)acrylic ester,
wherein the ingredient (A) is crosslinked by at least one crosslinking agent selected from the group consisting of a metal chelate compound, a metal oxide and a metal hydroxide, and
the blending ratio of the ingredient (A) is 70 to 90 weight % based on the total amount of the ingredient (A) and ingredient (B).

2. A pressure sensitive adhesive according to claim 1,
wherein the crosslinking agent contains at least one metal chelate compound selected from an aluminum acetylacetonate complex and a titanium acetylacetonate complex.

3. A pressure sensitive adhesive according to claims 1 or 2,
wherein the ingredient (A) is crosslinked by reaction with 0.001 to 5 weight % of the crosslinking agent based on the total amount of the pressure sensitive adhesive.

4. A pressure sensitive adhesive according to any one of claims 1-3,
wherein the carboxyl group-containing monomer is an acrylic acid or a methacrylic acid.

5. A pressure sensitive adhesive according to any one of claims 1-3,
wherein the ingredient (A) is a copolymer of an acrylic acid and octyl acrylate.

6. A pressure sensitive adhesive according to any one of claims 1-5,
wherein the pyrrolidone group-containing monomer is N-vinyl-2-pyrrolidone.

7. A pressure sensitive adhesive according to any one of claims 1-5,
wherein the ingredient (B) is a copolymer of 2-ethyhexyl acrylate and N-vinyl-2-pyrrolidone.

8. A pressure sensitive adhesive according to any one of claims 1-7,
comprising 1 to 30 weight % of a liquid organic compound miscible with the ingredient (A) and ingredient (B) based on the total amount of pressure sensitive adhesive.

9. A patch comprising:
an adhesive layer including a pressure sensitive adhesive according to any one of claims 1-8; and
an active pharmaceutical ingredient.

## Patentansprüche

1. Ein druckempfindliches Haftmittel, umfassend:
einen Bestandteil (A), welcher ein Copolymer eines Carboxylgruppe-enthaltenden Monomers und (Meth)acrylester ist; und
einen Bestandteil (B), welcher ein Copolymer aus einem Pyrrolidongruppeenthaltenden Monomer und (Meth)acrylester ist,
worin der Bestandteil (A) durch mindestens ein Vernetzungsmittel ausgewählt aus der Gruppe bestehend aus einer Metallchelat-Verbindung, einem Metalloxid und einem Metallhydroxid vernetzt ist, und
das Blendverhältnis des Bestandteils (A) 70 bis 90 Gew.-% basierend auf der Gesamtmenge des Bestandteils (A) und des Bestandteils (B) ist.

2. Druckempfindliches Haftmittel gemäß Anspruch 1, worin das Vernetzungsmittel wenigstens eine Metallchelat-Verbindung ausgewählt aus Aluminiumacetylacetonatkomplex und Titanacetylacetonatkomplex enthält.

3. Druckempfindliches Haftmittel gemäß den Ansprüchen 1 oder 2, worin der Bestandteil (A) durch Reaktion mit 0,001 bis 5 Gew.-% des Vernetzungsmittels basierend auf der Gesamtmenge des druckempfindlichen Haftmittels vernetzt ist.

4. Druckempfindliches Haftmittel gemäß einem der Ansprüche 1 bis 3, worin das Carboxylgruppe-enthaltende Monomer eine Acrylsäure oder eine Methacrylsäure ist.

5. Druckempfindliches Haftmittel gemäß einem der Ansprüche 1 bis 3, worin der Bestandteil (A) ein Copolymer einer Acrylsäure und Octylacrylat ist.

6. Druckempfindliches Haftmittel gemäß einem der Ansprüche 1 bis 5, worin das Pyrrolidongruppe-enthaltende Monomer N-Vinyl-2-pyrrolidon ist.

7. Druckempfindliches Haftmittel gemäß einem der Ansprüche 1 bis 5, worin der Bestandteil (B) ein Copolymer aus 2-Ethylhexylacrylat und N-vnyl-2-pyrrolidon ist.

8. Druckempfindliches Haftmittel gemäß einem der Ansprüche 1 bis 7, umfassend 1 bis 3 Gew.-% einer flüssigen organischen Verbindung, die mit dem Bestandteil (A) und Bestandteil (B) mischbar ist, basierend auf der Gesamtmenge des druckempfindlichen Haftmittels.

9. Ein Patch umfassend: Eine Klebeschicht beinhaltend ein druckempfindliches Haftmittel gemäß einem der Ansprüche 1 bis 8; und einen wirksamen pharmazeutischen Bestandteil.

## Revendications

1. Adhésif sensible à la pression, comprenant :
un ingrédient (A) qui est un copolymère d'un monomère contenant un groupe carboxyle et un ester (méth)acrylique ; et
un ingrédient (B) qui est un copolymère d'un monomère contenant un groupe pyrrolidone et un ester (méth)acrylique,
dans lequel l'ingrédient (A) est réticulé par au moins un agent de réticulation choisi dans le groupe consistant en une composé chélate métallique, un oxyde métallique and un hydroxyde métallique, et
le rapport de mélange de l'ingrédient (A) est de 70% à 90% en poids basé sur la quantité totale d'ingrédient (A) et d'ingrédient (B).

2. Adhésif sensible à la pression selon la revendication 1,
dans lequel l'agent de réticulation contient au moins un composé chélate métallique choisi parmi un complexe acétylacétonate d'aluminium et un complexe acétylacétonate de titane.

3. Adhésif sensible à la pression selon la revendication 1 ou 2,
dans lequel l'ingrédient (A) est réticulé par réaction avec 0.001 à 5% en poids d'agent de réticulation basée sur la quantité totale d'adhésif sensible à la pression.

4. Adhésif sensible à la pression selon l'une quelconque des revendications 1 à 3,
dans lequel le monomère contenant le groupe carboxyle est un acide acrylique ou un acide méthacrylique.

5. Adhésif sensible à la pression selon l'une quelconque des revendications 1 à 3,
dans lequel l'ingrédient (A) est un copolymère d'un acide acrylique et d'acrylate d'octyle.

6. Adhésif sensible à la pression selon l'une quelconque des revendications 1 à 5,
dans lequel le monomère contenant un groupe pyrrolidone est le N-vinyl-2-pyrrolidone.

7. Adhésif sensible à la pression selon l'une quelconque des revendications 1 à 5,
dans lequel l'ingrédient (B) est un copolymère de 2-éthyhexylacrylate et de N-vinyl-2-pyrrolidone.

8. Adhésif sensible à la pression selon l'une quelconque des revendications 1 à 7,
comprenant de 1 à 30 % en poids d'un composé organique liquide miscible avec l'ingrédient (A) et l'ingrédient (B) basé sur la quantité totale d'adhésif sensible à la pression.

9. Timbre transdermique comprenant :
une couche adhésive comprenant un adhésif sensible à la pression selon l'une quelconque des revendications 1 à 8 ; et
un ingrédient actif sur le plan pharmaceutique.
